# NEUE EUROPÄISCHE PATENTSCHRIFT

(11) **EP 0 907 458 B2**
(45) Veröffentlichungstag und Bekanntmachung des Hinweises auf die Entscheidung über den Einspruch: **24.11.2004**
(45) Hinweis auf die Patenterteilung: 04.10.2001
(21) Anmeldenummer: 97928268.8
(22) Anmeldetag: 23.06.1997
(51) Int. Cl.: B23Q 27/00

(54) **VERFAHREN UND VORRICHTUNG ZUR HERSTELLUNG VON DER KREISFORM ABWEICHENDEN INNEN- UND/ODER AUSSENKONTUREN**
METHOD AND DEVICE FOR PRODUCING WORKPIECES WITH A NON-CIRCULAR INTERNAL AND/OR EXTERNAL SHAPE
PROCEDE ET DISPOSITIF POUR REALISER DES CONTOURS INTERIEURS ET/OU EXTERIEURS DEVIANT DE LA FORME CIRCULAIRE

(30) Priorität: 21.06.1996 DE 19624722
(43) Veröffentlichungstag der Anmeldung: 14.04.1999
(73) Patentinhaber: Iprotec Maschinen- und Edelstahlprodukte GmbH, 32469 Petershagen-Friedewalde (DE)
(72) Erfinder: KOCHSIEK, Adolf, D-33818 Leopoldshöhe (DE)
(74) Vertreter: Stenger, Watzke & Ring Patentanwälte
(86) Internationale Anmeldenummer: PCT/EP1997/003274
(87) Internationale Veröffentlichungsnummer: WO 1997/049521

(56) Entgegenhaltungen:
- DE-A- 2 250 739
- DE-A- 4 034 516
- DE-A- 4 212 238
- DE-C- 347 428
- DE-C- 911 689
- SCHONWANDT U: "NEUES VERFAHREN ZUM DREHEN UND SCHLEIFEN VON POLYGONPROFILEN" ZWF ZEITSCHRIFT FUR WIRTSCHAFTLICHE FERTIGUNG UND AUTOMATISIERUNG, Bd. 84, Nr. 8, 1.August 1989, Seiten 469-471, XP000080726
- Prospekt "Form-Dreh-Zentrum FDZ100" der Heckler & Kock Maschinen-und Anlagenbau GmbH

## Beschreibung

Die Erfindung betrifft ein Verfahren zur Herstellung von von der Kreisform abweichenden Innen- und/oder Außenkonturen gemäß Oberbegriff von Patentanspruch 1 Weiterhin betrifft die Erfindung eine Vorrichtung gemäß Oberbegriff von Patentanspruch 7 zur Durchführung dieses Verfahrens; siehe DE-C 911 689.

Ein anderes Verfahren zur Herstellung von Werkstücken mit polygonaler Außen- und/oder Innenkontur durch spanabhebende Bearbeitung ist aus der EP-PS 0 097 346 bekannt. Bei diesem bekannten Verfahren greift das auf einer Kreisbahn geführte Werkstück während des gesamten Umlaufes am Werkstück an, wobei die Bahngeschwindigkeit des Werkzeugs jeweils während eines Umlaufs nach einem periodischen Bewegungsgesetz geändert wird. Diese permanente Änderung der Bahngeschwindigkeit des Werkzeugs während eines jeden Umlaufes erfordert neben programmierbaren Funktionsgebem für den Werkzeugantrieb ein nach Pascalschen Kurven steuerbares Getriebe. Somit ermöglicht dieses bekannte Verfahren zwar die Herstellung einer Vielzahl von polygonalen Außen- und Innenkonturen, jedoch bedarf es aufgrund der permanenten Steuerung der Bahngeschwindigkeit des Werkzeugs eines großen steuerungstechnischen und apparativen Aufwandes, weshalb dieses Verfahren nur auf speziell für dieses Verfahren ausgerichteten Vorrichtungen mit steuerbaren Getrieben für den Werkzeugantrieb durchführbar ist.

Der Erfindung liegt die **Aufgabe** zugrunde, ein Verfahren zur Herstellung von von der Kreisform abweichenden Innen- und/oder Außenkonturen zu schaffen, mit dem beliebige von der Kreisform abweichende Innen- und/oder Außenkonturen mit geringem steuerungstechnischen Aufwand auch mittels handelsüblicher Vorrichtungen herstellbar sind. Weiterhin liegt der Erfindung die Aufgabe zugrunde, eine Vorrichtung zur Durchführung dieses Verfahrens zu schaffen.

Die verfahrensmäßige Lösung dieser Aufgabe durch die Erfindung ist dadurch gekennzeichnet, daß das Werkzeug auf einer Kreisbahn mit konstanter Drehzahl um eine innerhalb der Kontur des Werkstückes liegende Drehachse angetrieben wird und daß der Flugkreisradius des Werkzeuges größer als der Abstand zwischen den Drehachsen von Werkstück und Werkzeug ist.

Durch die unterschiedlichen Geschwindigkeiten und gegebenenfalls Drehrichtungen des sich konstant drehenden Werkstückes einerseits sowie durch die voneinander abweichenden Drehmittelpunkte und den wählbaren Radius der kreisförmigen Bewegungsbahn der Werkzeug-Wirkfläche ergeben sich vielfältige Konturen der durch die genannten Parameter erzeugten Bewegungsbahn der Werkzeug-Wirkfläche. Die Besonderheit dieses Verfahrens liegt zum einen darin, daß trotz der konstanten Drehgeschwindigkeiten von Werkstück und Werkzeug unterschiedlichste von der Kreisform abweichende Konturen herstellbar sind und daß zum anderen dieses Verfahren auf handelsüblichen Vorrichtungen durchgeführt werden kann, da zum Antrieb des auf dem Schlitten angeordneten Werkzeugs nur ein separater Antrieb, jedoch keine aufwendigen steuerbaren Getriebe zur Kopplung der Drehgeschwindigkeiten zwischen Werkstück und Werkzeug notwendig sind. Die Kontur der von der Kreisgeometrie abweichenden Kontur ist somit allein abhängig von dem jeweils konstanten Drehzahlverhältnis der Drehachsen, dem Flugkreisradius des Werkzeuges sowie dem Achsversatz der Drehachsen.

Gemäß einer bevorzugten Ausführungsform des erfindungsgemäßen Verfahrens sind die Drehzahlunterschiede zwischen der Werkstückdrehzahl einerseits und der Werkzeugdrehzahl andererseits ganzzahlig. Bei ganzzahligen Drehzahlunterschieden ergeben sich beispielsweise bei einem Verhältnis von 2:1 dreieckförmige und bei einem Verhältnis von 3:1 viereckförmige Konturen.

Bei einer alternativen Ausführungsform des erfindungsgemäßen Verfahrens kann die Vielfalt der herzustellenden Konturen noch dadurch erhöht werden, daß die Werkzeugachse ihrerseits auf einer Kreisbahn mit konstanter, von der Drehzahl des Werkzeugs hinsichtlich Größe und/oder Drehrichtung abweichender Geschwindigkeit um eine Exzenterachse angetrieben wird, die von der Werkzeugachse abweicht.

Die drei möglichen Drehachsen, nämlich die Werkstückachse, die Werkzeugachse sowie die Exzenterachse verlaufen gemäß einer Ausführungsform der Erfindung parallel zueinander. Die zueinander parallel verlaufenden Drehachsen führen zu einer geraden, das heißt parallel zur Werkstückachse verlaufenden Innen- und/oder Außenkontur des Werkstücks.

Gemäß einer weiteren Ausführungsform der Erfindung ist die Lage der Drehachsen zueinander einzeln einstellbar. Durch die Einstellung der Lage der Drehachsen, des sogenannten Phasenwinkels, können schraubenförmige Außen- und/oder Innenkonturen hergestellt werden.

Zur Veränderung des Durchmessers der von der Kreisgeometrie abweichenden Kontur sowie zur Erzeugung konischer und sphärischer Konturen wird mit einer Weiterbildung der Erfindung vorgeschlagen, daß der Flugkreisradius des Werkzeuges über einen drehfest auf der Werkzeugspindel angeordneten, sich mit der Werkzeugachse drehenden Plandrehschieber stufenlos verstellt werden kann.

Die vorrichtungsmäßige Lösung der Aufgabenstellung ergibt die durch eine Vorrichtung mit den Merkmalen des Patentanspruches 7.

Schließlich wird mit der Erfindung vorgeschlagen, daß die Werkzeugachse exzentrisch in der Werkzeugspindel angeordnet ist und ihrerseits auf einer Kreisbahn mit konstanter, von der Drehzahl des Werkzeuges hinsichtlich Größe und/oder Drehrichtung abweichender Geschwindigkeit um eine Exzenterachse antreibbar ist, die von der Werkzeugachse abweicht. Diese zusätzliche Drehachse ermöglicht die Herstellung einer Vielzahl neuer, von der Kreisform abweichender Innen- und/oder Außenkonturen. Insbesondere wird die Herstellung einzelner Vertiefungen in der Werkstückwand oder gar Durchbrüchen durch die Werkstückwand durch diese erfindungsgemäße Ausgestaltung der Vorrichtung ermöglicht.

Weitere Einzelheiten und Vorteile der Erfindung ergeben sich aus der nachfolgenden Beschreibung der zugehörigen Zeichnung, in der drei Ausführungsbeispiele einer erfindungsgemäßen Vorrichtung dargestellt sind. In der Zeichnung zeigt:
- Fig. 1a: einen schematischen Aufbau einer ersten Ausführungsform ohne Exzenterachse;
- Fig. 1b: einen schematischen Aufbau einer weiteren Ausführungsform ohne Exzenterachse, jedoch einen Plandrehschieber aufweisend;
- Fig. 2: einen schematischen Aufbau einer Vorrichtung mit Exzenterachse;
- Fig. 3: eine mit einer Vorrichtung gemäß Fig. 1 herstellbare dreieckförmige Polygonkontur;
- Fig. 4a: eine mit einer Vorrichtung gemäß Fig. 1 herstellbare viereckige Polygonfigur mit geraden Seiten;
- Fig. 4b: eine Fig. 4a entsprechende Polygonkontur mit konkaven Seiten;
- Fig. 5a: eine mit einer Vorrichtung gemäß Fig. 1 herstellbare fünfeckige Polygonkontur mit konkaven Seiten;
- Fig. 5b: eine Fig. 5a entsprechende Polygonkontur mit geraden Seiten;
- Fig. 6: eine mit einer Vorrichtung gemäß Fig. 2 hergestellte Polygonfigur und
- Fig. 7: eine weitere mit einer Vorrichtung gemäß Fig. 2 hergestellte Polygonkontur.

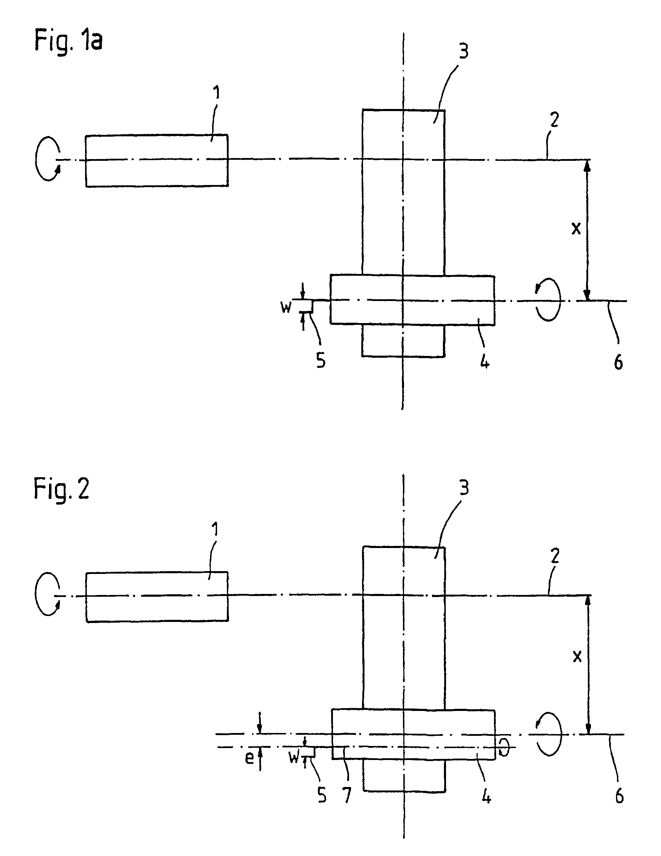

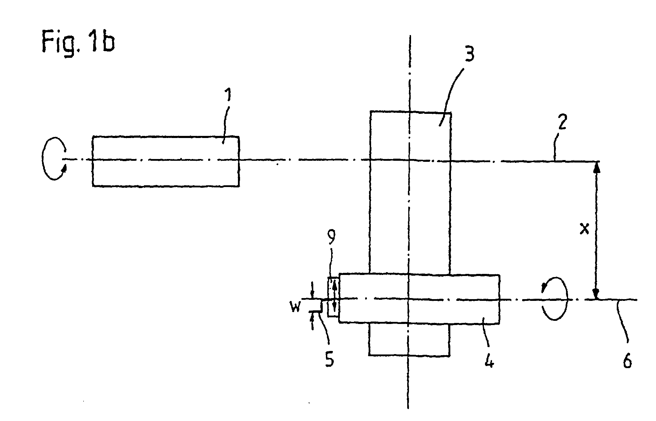

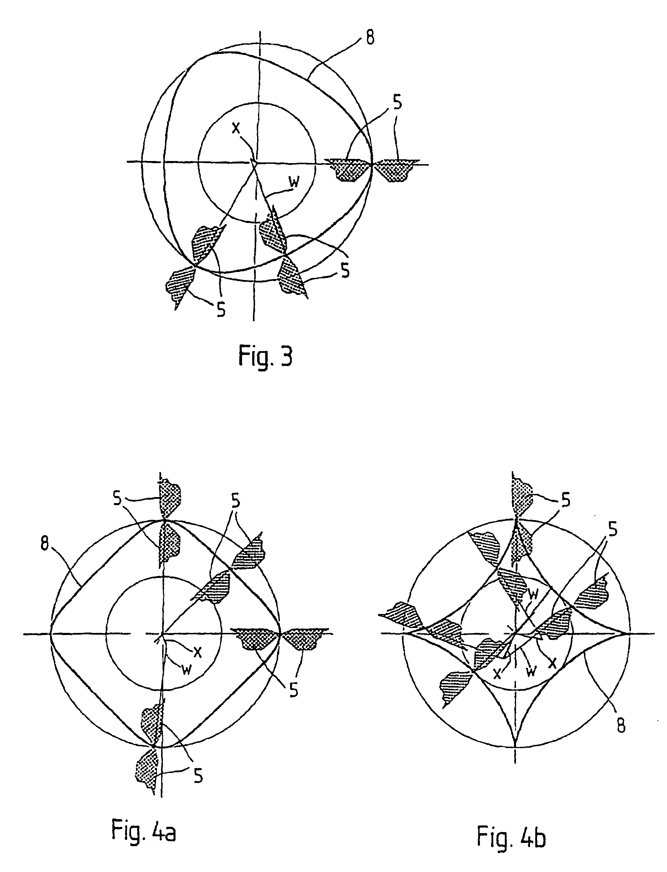

In den Abbildungen Fig. 1a, 1b und 2 ist schematisch der prinzipielle Aufbau zweier Ausführungsformen einer Vorrichtung zur Durchführung des Verfahrens zur Herstellung von von der Kreisform abweichenden Innen- und/oder Außenkonturen dargestellt. Eine nicht näher dargestellte Maschine mit Einspannung für mindestens ein Werkstück weist eine Werkstückspindel 1 auf, über die das Werkstück um eine Werkstückdrehachse 2 drehend angetrieben wird. Die Vorrichtung umfaßt ferner einen Schlitten 3, über den eine Werkzeugspindel 4 sowohl radial zur Werkstückdrehachse 2 als auch axial in Längsrichtung der Werkstückdrehachse 2 verfahrbar ist.

Gemäß Fig. 1a ist an der Werkzeugspindel 4 ein Werkzeug 5 angeordnet, das seinerseits auf einer Kreisbahn mit konstanter, von der Drehzahl des Werkstückes abweichender Geschwindigkeit um eine Werkzeugdrehachse 6 drehend angetrieben wird. In der Abbildung ist der Abstand zwischen der Werkstückdrehachse 2 und der Werkzeugdrehachse 6 mit x gekennzeichnet. Der Abstand zwischen der Wirkfläche des Werkzeuges 5 und der Werkzeugdrehachse 6 ist mit w gekennzeichnet.

Bei der in Fig. 1 b dargestellten Ausführungsform ist auf der Werkzeugspindel 4 drehfest ein Plandrehschieber 9 angeordnet, über den durch Verstellen des Werkzeugs 5 in Richtung des Doppelpfeils der Flugkreisradius des Werkzeuges 5 eingestellt werden kann.

Bei der in Fig. 2 dargestellten zweiten Ausführungsform einer Vorrichtung zur Durchführung des Verfahrens zur Herstellung von von der Kreisform abweichenden Innen- und/oder Außenkonturen rotiert das Werkzeug 5 nicht nur um die Werkzeugdrehachse 6, sondern zusätzlich um eine zu dieser radial versetzte Exzenterdrehachse 7. Der Abstand zwischen der Werkzeugdrehachse 6 und der Exzenterdrehachse 7 ist als Exzentrizität e gekennzeichnet.

Die Drehzahlen der um die Drehachsen 2, 6 und 7 drehend angetriebenen Bauteile sind stets konstant, jedoch unterschiedlich hinsichtlich Größe und/oder Drehrichtung. Bei den in den Abbildungen Fig. 1 und 2 dargestellten Ausführungsbeispielen sind die Drehachsen 2 und 6 bzw. 2, 6 und 7 parallel zueinander angeordnet. Ebenso ist jedoch eine um einen vorgebbaren Winkel räumlich versetzte Anordnung der Drehachsen 2 und 6 bzw. 2, 6 und 7 zueinander möglich.

Die nachfolgend beschriebenen Abbildungen 3 bis 7 zeigen beispielhafte Innen- und/oder Außenkonturen, die mit Vorrichtungen gemäß den Abbildungen Fig. 1 und/oder 2 herstellbar sind.

Fig. 3 zeigt ein Werkstück 8, das eine dreieckförmige Polygonkontur aufweist. Wie der beispielhaft dargestellte Angriff des Werkzeuges 5 an dem Werkstück 8 zeigt, ist diese Polygonkontur als Außen- und/oder Innenkontur herstellbar. Den nachfolgend genannten Parametern zur Herstellung einer solchen dreieckförmigen Polygonkontur ist zu entnehmen, daß diese mit einer Vorrichtung gemäß Fig. 1, das heißt ohne Exzentrizität e erzeugt wurde. Aufgrund des ganzzahligen Drehzahlverhältnisses von -2:1 ergab sich die dargestellte dreieckförmige Polygonkontur. Das Minus-Vorzeichen bei der Drehzahl um die Werkstückdrehachse 2 zeigt an, daß die Drehrichtung gegenläufig zu der Drehung um die Werkzeugdrehachse 6 erfolgt. In der Abbildung Fig. 3 sind ferner entsprechend Fig. 1 die Abstände zwischen Werkstückdrehachse 2 und Werkzeugdrehachse 6 mit x sowie zwischen Werkzeugwirkfläche und Werkzeugdrehachse 6 mit w gekennzeichnet. In der Tabelle sind sie als Radien bezeichnet.

| | Werkstück | Exzenter | Werkzeug |
|---|---|---|---|
| Radius | 2,0 | 0,0 | 18,0 |
| Phasenwinkel | 0,0 | 0,0 | 0,0 |
| Drehzahl | -2,0 | 0,0 | 1,0 |

In Fig. 4a ist ein Werkstück 8 mit viereckförmiger Polygonkontur dargestellt. Wie aus der zugehörigen Parameter-Tabelle ersichtlich, wurde diese von Fig. 3 abweichende Polygonkontur allein dadurch erzielt, daß das Drehzahlverhältnis von -2:1 auf -3:1 verändert wurde.

| | Werkstück | Exzenter | Werkzeug |
|---|---|---|---|
| Radius | 2,0 | 0,0 | 18,0 |
| Phasenwinkel | 0,0 | 0,0 | 0,0 |
| Drehzahl | -3,0 | 0,0 | 1,0 |

Fig. 4b zeigt wiederum eine viereckförmige Polygonkontur, jedoch diesmal mit konkav verlaufenden Seiten. Wie aus der zugehörigen Parameter-Tabelle ersichtlich, wurde die Änderung des Profils der Seiten dieser Polygonkontur dadurch erreicht, daß die Abstände x und w verändert wurden.

| | Werkstück | Exzenter | Werkzeug |
|---|---|---|---|
| Radius | 5,0 | 0,0 | 15,1 |
| Phasenwinkel | 0,0 | 0,0 | 0,0 |
| Drehzahl | -3,0 | 0,0 | 1,0 |

Fig. 5a zeigt ein Werkstück 8 mit fünfeckförmiger Polygonkontur. Wie aus der Parameter-Tabelle ersichtlich, ergibt sich diese Polygonkontur durch Veränderung des Drehzahlverhältnisses auf ein Verhältnis von -4:1. Alle anderen Parameter entsprechen denen der Konturen gemäß Fig. 3 und Fig. 4a.

| | Werkstück | Exzenter | Werkzeug |
|---|---|---|---|
| Radius | 2,0 | 0,0 | 18,0 |
| Phasenwinkel | 0,0 | 0,0 | 0,0 |
| Drehzahl | -4,0 | 0,0 | 1,0 |

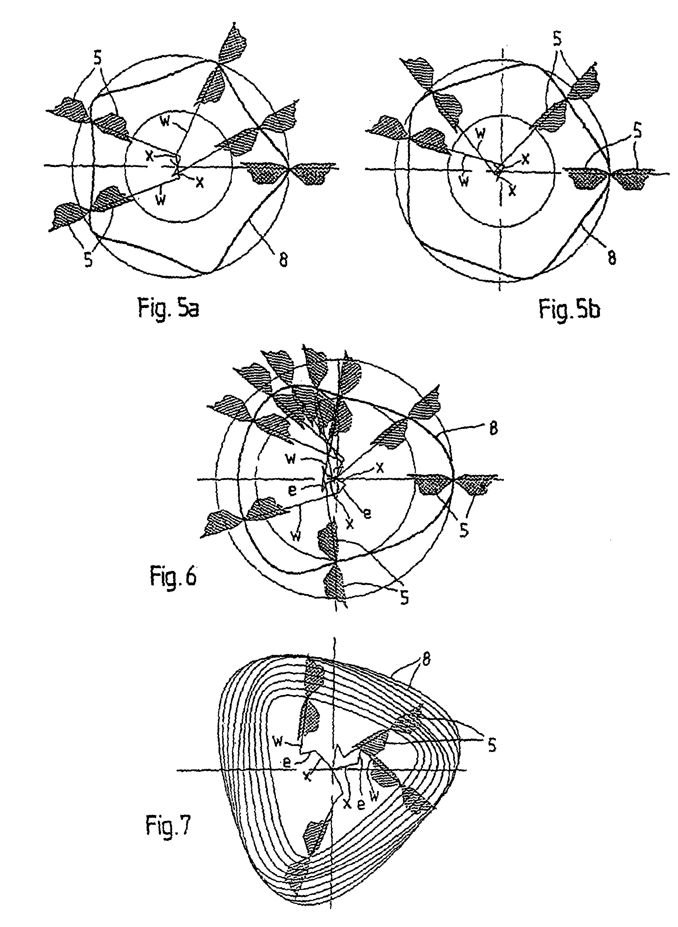

Fig. 5b zeigt ebenfalls eine fünfeckförmige Polygonkontur, jedoch weist dieses Fünfeck gegenüber dem in Fig. 5a dargestellten Fünfeck gerade Seiten auf. Diese Veränderung des Profils der Seiten des Fünfecks wurde wiederum durch die Veränderung der Parameter der Abstände x und w erreicht, wie dies der zugehörigen Parameter-Tabelle zu entnehmen ist.

| | Werkstück | Exzenter | Werkzeug |
|---|---|---|---|
| Radius | 1,3 | 0,0 | 18,7 |
| Phasenwinkel | 0,0 | 0,0 | 0,0 |
| Drehzahl | -4,0 | 0,0 | 1,0 |

In Fig. 6 ist schließlich ein Werkstück 8 mit einer Polygonkontur dargestellt, wie sie mit Hilfe einer Vorrichtung gemäß Fig. 2, das heißt mit einer zusätzlichen Exzenterdrehachse 7 herstellbar ist. Wie aus der Abbildung sowie der zugehörigen Parameter-Tabelle ersichtlich, ist der mit x gekennzeichnete Abstand zwischen der Werkstückdrehachse 2 und der Werkzeugdrehachse 6 gleich der Exzentrizität e.

| | Werkstück | Exzenter | Werkzeug |
|---|---|---|---|
| Radius | 2,0 | 2,0 | 18,0 |
| Phasenwinkel | 0,0 | 0,0 | 0,0 |
| Drehzahl | -2,0 | 3,0 | 1,0 |

In Fig. 7 ist schließlich ein Werkstück 8 dargestellt, das eine dreieckförmige, schraubenförmig und konisch verlaufende Polygonkontur aufweist. Wie aus den zugehörigen Parameter-Tabellen ersichtlich, sind der schraubenförmig verdrehte Verlauf sowie die konische Ausbildung der Werkstückkontur dadurch entstanden, daß beim Verfahren axial in Längsrichtung der Werkstückdrehachse 2 bei jedem Schnitt des Werkzeuges 5 der Phasenwinkel der Werkstückdrehachse 2 zur Werkzeugdrehachse 6 sowie der Abstand x verändert werden. Der schraubenförmige Verlauf erfolgt dabei durch den sich ändernden Phasenwinkel. Die Konizität des Werkstückes 8 wird durch die gleichmäßige Änderung des Abstandes x zwischen der Werkstückdrehachse 2 und der Werkzeugdrehachse 6 entlang der Werkstückdrehachse 2 bewirkt.

### 1. Schnitt

| | Werkstück | Exzenter | Werkzeug |
|---|---|---|---|
| Radius | 14,0 | 3,0 | 11,0 |
| Phasenwinkel | 40,0 | 0,0 | 0,0 |
| Drehzahl | 1,0 | -2,0 | 1,0 |

### 2. Schnitt

| | Werkstück | Exzenter | Werkzeug |
|---|---|---|---|
| Radius | 13,0 | 3,0 | 11,0 |
| Phasenwinkel | 40,0 | 0,0 | 0,0 |
| Drehzahl | 1,0 | -2,0 | 1,0 |

### 3. Schnitt

| | Werkstück | Exzenter | Werkzeug |
|---|---|---|---|
| Radius | 12,0 | 3,0 | 11,0 |
| Phasenwinkel | 20,0 | 0,0 | 0,0 |
| Drehzahl | 1,0 | -2,0 | 1,0 |

### 4. Schnitt

| | Werkstück | Exzenter | Werkzeug |
|---|---|---|---|
| Radius | 11,0 | 3,0 | 11,0 |
| Phasenwinkel | 10,0 | 0,0 | 0,0 |
| Drehzahl | 1,0 | 2,0 | 1,0 |

### 5. Schnitt

| | Werkstück | Exzenter | Werkzeug |
|---|---|---|---|
| Radius | 10,0 | 3,0 | 11,0 |
| Phasenwinkel | 0,0 | 0,0 | 0,0 |
| Drehzahl | 1,0 | -2,0 | 1,0 |

Wie aus den voranstehenden Beispielen gemäß den Abbildungen Fig. 3 bis Fig. 7 ersichtlich, können die unterschiedlichsten von der Kreisform abweichenden Innen- und/oder Außenkonturen schon durch das Verändern nur eines der fest eingebbaren Parameter bewirkt werden. Diese einmal eingestellten Parameter, insbesondere die Drehzahlen, bleiben während der gesamten Bearbeitung konstant. Nur zur Erzielung schraubenförmiger und/oder konischer Konturen ist ein Nachstellen einzelner Parameter beim Verfahren des Schlittens 3 entlang der Werkstückdrehachse 2 notwendig. Durch die unterschiedlichen Geschwindigkeiten und gegebenenfalls Drehrichtungen des sich konstant drehenden Werkstückes 8 einerseits und Werkzeuges 5 andererseits, durch die voneinander abweichenden Drehmittelpunkte und die wählbaren Radien der kreisförmigen Bewegungsbahnen ergeben sich vielfältige Konturen durch die genannte parametererzeugte Bewegungsbahn der Werkzeugwirkfläche, die trotz konstanter Drehgeschwindigkeiten zu unterschiedlichsten Profilen führt. Wenn beispielsweise der Abstand x zwischen der Werkstückdrehachse 2 und der Werkzeugdrehachse 6 größer ist als der Radius w der Bewegungsbahn des Werkzeuges 5 ergibt sich beispielsweise in Abhängigkeit von der Drehrichtung und Differenzdrehzahl eine polygone Innenkontur, wohingegen bei umgekehrtem Verhältnis eine entsprechende Außenkontur geschaffen wird.

Wie aus den voranstehenden Darlegungen ersichtlich, können mittels des beschriebenen Verfahrens bzw. der zugehörigen Vorrichtung die unterschiedlichsten von der Kreisform abweichenden Innen- und/oder Außenkonturen mittels herkömmlicher Maschinen geschaffen werden.

### Bezugszeichenliste

- 1: Werkstückspindel
- 2: Werkstückdrehachse
- 3: Schlitten
- 4: Werkzeugspindel
- 5: Werkzeug
- 6: Werkzeugdrehachse
- 7: Exzenterdrehachse
- 8: Werkstück
- 9: Plandrehschieber
- x: Abstand Werkstückdrehachse - Werkzeugdrehachse
- w: Abstand Werkzeugwirkfläche - Werkzeugdrehachse
- e: Exzentrizität

## Patentansprüche

1. Verfahren zur Herstellung von von der Kreisform abweichenden Innenund/oder Außenkonturen auf einer Maschine mit Einspannung mindestens eines mit konstanter Geschwindigkeit drehend antreibbaren Werkstückes und mindestens eines Werkzeuges, insbesondere für eine spanabhebende Bearbeitung, das mittels eines Schlittens sowohl radial zur Drehachse des Werkstückes als auch axial in Längsrichtung dieser Drehachse verfahrbar ist, wobei das Werkzeug seinerseits mit seiner Wirkfläche auf einer Werkzeugbahn mit von der Drehzahl des Werkstückes hinsichtlich Größe und/oder Drehrichtung abweichender Geschwindigkeit, um eine Werkzeugachse drehend angetrieben wird, die von der Drehachse des Werkstückes abweicht,
**dadurch gekennzeichnet,**
**daß** das Werkzeug auf einer Kreisbahn mit konstanter Drehzahl um eine innerhalb der Kontur des Werkstückes liegende Drehachse angetrieben wird, daß der Flugkreisradius des Werkzeuges größer als der Abstand zwischen den Drehachsen von Werkstück und Werkzeug ist.

2. Verfahren nach Anspruch 1, **dadurch gekennzeichnet, daß** die Drehzahlunterschiede zwischen Werkstückdrehzahl einerseits und Werkzeugdrehzahl andererseits ganzzahlig sind.

3. Verfahren nach Anspruch 1 oder 2, **dadurch gekennzeichnet, daß** die Werkzeugdrehachse ihrerseits auf einer Kreisbahn mit konstanter, von der Drehzahl des Werkzeuges hinsichtlich Größe und/oder Drehrichtung abweichender Geschwindigkeit um eine Exzenterachse angetrieben wird, die von der Werkzeugachse abweicht.

4. Verfahren nach einem der Ansprüche 1 bis 3, **dadurch gekennzeichnet, daß** die Drehachsen parallel zueinander verlaufen.

5. Verfahren nach einem der Ansprüche 1 bis 3, **dadurch gekennzeichnet, daß** die Lage der Drehachsen zueinander einzeln einstellbar ist.

6. Verfahren nach einem der Ansprüche 1 bis 5, **dadurch gekennzeichnet, daß** der Flugkreisradius des Werkzeuges über einen sich mit der Werkzeugachse drehenden Plandrehschieber stufenlos verstellbar ist.

7. Vorrichtung zur Durchführung des Verfahrens nach mindestens einem der Ansprüche 1 bis 6 mit einer Werkstückspindel (1) mit Einspannung mindestens eines mit konstanter Geschwindigkeit angetriebenen Werkstückes (8) und mindestens eines Werkzeuges (5), das mittels eines Schlittens (3) sowohl radial zur Drehachse (2) des Werkstückes (8) als auch axial in Längsrichtung dieser Drehachse (2) verfahrbar ist, wobei das Werkzeug, (5) seinerseits an einer Werkzeugspindel (4) eingespannt und mit dieser auf einer Werkzeugbahn mit einer von der Drehzahl des Werkstückes (8) hinsichtlich Größe und/oder Drehrichtung abweichender Geschwindigkeit um eine Werkzeugachse (6.) drehend angetrieben ist, die von der Drehachse (2) des Werkstückes abweicht,
**dadurch gekennzeichnet,**
**daß** auf der Werkzeugspindel (4) drehfest ein Plandrehschieber (9) zur Einstellung des Flugkreisradius des Werkzeugs angeordnet ist, daß das Werkzeug auf einer Kreisbahn mit konstanter Drehzahl angetrieben ist und seine Drehachse innerhalb der Kontur des Werkstücks liegt und daß der Flugkreisradius des Werkzeuges größer als der Abstand zwischen den Drehachsen von Werkstück und Werkzeug ist.

8. Vorrichtung nach Anspruch 7, **dadurch gekennzeichnet, daß** die Werkzeugachse (6) exzentrisch in der Werkzeugspindel (4) angeordnet ist und ihrerseits auf einer Kreisbahn mit konstanter, von der Drehzahl des Werkzeuges (5) hinsichtlich Größe und/oder Drehrichtung abweichender Geschwindigkeit um eine Exzenterachse (7) antreibbar ist, die von der Werkzeugachse (6) abweicht.

9. Vorrichtung nach Anspruch 7 oder 8, **dadurch gekennzeichnet, daß** auf der Werkzeugspindel (4) drehfest ein Plandrehschieber (9) angeordnet ist, um den Flugkreisradius des Werkzeuges (5) stufenlos zu verstellen.

## Claims

1. A method of producing non-circular internal and/or external contours on a machine, in which are clamped at least one workpiece, which can be driven in rotation at constant speed, and at least one tool, particularly for machining, which can be moved by means of a carriage both radially to the axis of rotation of the workpiece and axially in the longitudinal direction of this axis of rotation, the tool, for its part, being driven in rotation with its effective area on a tool path about a tool axis, which differs from the axis of rotation of the workpiece, at a speed which differs from the speed of rotation of the workpiece as regards magnitude and/or direction of rotation, **characterised in that** the tool is driven on a circular path at a constant speed of rotation about an axis of rotation lying within the contour of the workpiece and that the radius of the circular projectory- of the tool is greater than the distance between the axes of rotation of the workpiece and the tool.

2. A method as claimed in claim 1, **characterised in that** the differences in the speed of rotation of the workpiece on the one hand and the tool in the other hand are whole numbers.

3. A method as claimed in claim 1 or 2, **characterised in that** the axis of rotation of the tool, for its part, is driven on a circular path about an eccentric axis, which differs from the axis of the tool, at a constant speed which differs from the speed of rotation of the tool as regards magnitude and/or direction of rotation.

4. A method as claimed in one of claims 1 to 3, **characterised in that** the axes of rotation extend parallel to one another.

5. A method as claimed in one of claims 1 to 3, **characterised in that** the position of the axes of rotation relative to one another can be adjusted individually.

6. A method as claimed in one of claims 1 to 5, **characterised in that** the radius of the circular trajectory of the tool is steplessly variable by means of a facing slide, which rotates with the tool axis.

7. Apparatus for carrying out the method as claimed in at least one of claims 1 to 6 including a workpiece spindle (1) in which are clamped at least one workpiece (8) driven at constant speed and at least one tool (5), which can be moved by means of a carriage (3) both radially to the axis of rotation (2) of the workpiece (8) and axially in the longitudinal direction of this axis of rotation (2), the tool (5), for its part, after being clamped on a tool spindle (4) and driven in rotation with it on a tool path about a tool axis (6), which differs from the axis of rotation (2) of the workpiece, at a speed which differs from the speed of rotation of the workpiece (8) as regards magnitude and/or direction of rotation, **characterised in that** a face slide (9) for adjusting the radius of the circular trajectory of the tool is rotationally fixedly arranged on the tool spindle (4), that the tool is driven on a circular path at a constant speed of rotation and its axis of rotation lies within the contour of the workpiece and that the radius of the circular trajectory of the tool is greater than the distance between the axes of rotation of the workpiece and the tool.

8. Apparatus as claimed in claim 7, **characterised in that** the tool axis (6) is arranged eccentrically in the tool spindle (4) and for its part can be driven on a circular path about an eccentric axis (7), which differs from the tool axis (6), at a constant speed which differs from the speed of rotation of the tool (5) as regards magnitude and/or direction of rotation.

9. Apparatus as claimed in claim 7 or 8, **characterised in that** a facing slide (9) is rotationally fixedly arranged on the tool spindle (4) in order to steplessly adjust the radius of the circular trajectory of the tool (5)

## Revendications

1. Procédé destiné à la réalisation de contours intérieurs et/ou extérieurs autres que circulaires sur une machine comportant un serrage pour au moins une pièce (8) pouvant être entraînée en rotation à vitesse constante, et au moins un outil (5), destiné notamment à un usinage par enlèvement de copeaux, qui peut être déplacé au moyen d'un traîneau (3) aussi bien radialement vers l'axe de rotation (2) de la pièce qu'axialement dans la direction longitudinale de cet axe de rotation, l'outil avec sa surface active étant de son côté entraîné en rotation sur une trajectoire d'outil à une vitesse qui est différente de la vitesse de rotation de la pièce en ce qui concerne l'importance et/ou le sens de rotation, et ce autour d'un axe de rotation (6) d'outil qui est différent de l'axe de rotation de la pièce,
**caractérisé en ce que** l'outil est entraîné à vitesse de rotation constante sur une trajectoire circulaire autour d'un axe de rotation situé à l'intérieur du contour de la pièce, et **en ce que** le rayon de la trajectoire circulaire de l'outil est plus important que l'écartement entre les axes de rotation de la pièce et de l'outil.

2. Procédé selon la revendication 1, **caractérisé en ce que** les différences de vitesses de rotation entre la vitesse de rotation de la pièce d'une part, et la vitesse de rotation de l'outil d'autre part, sont des multiples entiers.

3. Procédé selon la revendication 1 ou 2, **caractérisé en ce que** l'axe de rotation de l'outil est de son côté entraîné sur une trajectoire circulaire à une vitesse constante, qui est différente de la vitesse de rotation de l'outil en ce qui concerne l'importance et/ou le sens de rotation, et ce autour d'un axe d'excentrique qui est différent de l'axe de l'outil.

4. Procédé selon l'une quelconque des revendications 1 à 3, **caractérisé en ce que** les axes de rotation s'étendent parallèlement les uns par rapport aux autres.

5. Procédé selon l'une quelconque des revendications 1 à 3, **caractérisé en ce que** la position des axes de rotation les uns par rapport aux autres peut être réglée individuellement.

6. Procédé selon l'une quelconque des revendications 1 à 5, **caractérisé en ce que** le rayon de la trajectoire circulaire de l'outil peut être réglé en continu par l'intermédiaire d'un coulisseau rotatif transversal tournant avec l'axe de l'outil.

7. Dispositif destiné à la mise oeuvre du procédé selon l'une au moins des revendications 1 à 6, comportant une broche (1) de pièce dans laquelle est enserrée au moins une pièce (8) qui est entraînée à vitesse constante, et au moins un outil (5) qui peut être déplacé au moyen d'un traîneau (3) aussi bien radialement vers l'axe de rotation (2) de la pièce (8) qu'axialement dans la direction longitudinale de cet axe de rotation (2), l'outil (5) étant de son côté serré sur une broche (4) d'outil et étant entraîné avec celle-ci en rotation sur une trajectoire d'outil à une vitesse qui est différente de la vitesse de rotation de la pièce (8) en ce qui concerne l'importance et/ou le sens de rotation, et ce autour d'un axe de rotation (6) d'outil qui est différent de l'axe de rotation (2) de la pièce, **caractérisé en ce qu'**un coulisseau de tournage transversal (9) est disposé solidairement en rotation sur la broche (4) de l'outil afin de régler le rayon de la trajectoire circulaire de l'outil (5), **en ce que** l'outil est entraîné à vitesse constante sur une trajectoire circulaire et son axe de rotation est situé à l'intérieur du contour de la pièce, et **en ce que** le rayon de la trajectoire circulaire de l'outil est plus important que l'écartement entre les axes de rotation de la pièce et de l'outil.

8. Dispositif selon la revendication 7, **caractérisé en ce que** l'axe de rotation (6) de l'outil est disposé de façon excentrée dans la broche (4) d'outil, et peut de son côté être entraîné sur une trajectoire circulaire à une vitesse constante qui est différente de la vitesse de rotation de l'outil (5) en ce qui concerne l'importance et/ou le sens de rotation, et ce autour d'un axe d'excentrique (7) qui est différent de l'axe de rotation (6) de l'outil.

9. Dispositif selon la revendication 7 ou 8, **caractérisé en ce qu'**un coulisseau de tournage transversal (9) est disposé solidairement en rotation sur la broche (4) de l'outil afin de régler en continu le rayon de la trajectoire circulaire de l'outil (5).
